# EUROPEAN PATENT APPLICATION

(11) **EP 4 760 483 A1**
(43) Date of publication of application: **17.06.2026**
(21) Application number: 25211684.3
(22) Date of filing: 28.10.2025
(51) Int. Cl.: G06F 7/544

(54) **CIRCUITS AND METHODS FOR MULTIPLICATION USING DIGITAL SIGNAL PROCESSING BLOCKS**

(30) Priority: 16.12.2024 US 202418982252
(71) Applicant: Altera Corporation, San Jose, CA 95134 (US)
(72) Inventor: CHEN, Dongdong, San Jose (US); LANGHAMMER, Martin, Alderbury, SP53AB (GB); BERGENDAHL, Jason, Cupertino, 95014 (US); GANUSOV, Ilya, San Jose, 95124 (US)
(74) Representative: Viering, Jentschura & Partner mbB Patent- und Rechtsanwälte

(57) **Abstract**

An integrated circuit includes a digital signal processing circuit. The digital signal processing circuit includes fixed point multiplier circuits, floating point multiplier circuits, and adder circuits. The digital signal processing circuit is configurable to implement a reduction of floating point multiplication operations based on floating point inputs to the digital signal processing circuit using the fixed point multiplier circuits, the floating point multiplier circuits, and the adder circuits.

## Description

### BACKGROUND

Configurable integrated circuits (ICs) can be configured by users to implement desired custom logic functions. In a typical scenario, a logic designer uses computer-aided design (CAD) tools to design a custom circuit design. When the design process is complete, the computer-aided design tools generate an image containing configuration data bits. The configuration data bits are then loaded into configuration memory elements that configure configurable logic circuits in the integrated circuit to perform the functions of the custom circuit design.

### BRIEF DESCRIPTION OF DRAWINGS

Figure 1 is a diagram that illustrates an example of a digital signal processing (DSP) circuit block in an integrated circuit (IC) that has multiple levels of pipelined circuits.
Figure 2 is a diagram that illustrates an example of the digital signal processing (DSP) circuit block of Figure 1 configured as a finite impulse response (FIR) filter circuit.
Figure 3 is a diagram that illustrates an example of the digital signal processing (DSP) circuit block of Figure 1 configured as another FIR filter circuit.
Figure 4 is a diagram that illustrates an example of the DSP circuit block of Figure 1 configured as a partial product circuit that is a portion of a larger multiplier circuit.
Figures 5A-5C are diagrams that illustrate examples of the DSP circuit block of Figure 1 configured in three different reduction operations.
Figure 6 is a diagram that illustrates an example of a multiplier circuit, or a portion of a multiplier circuit, that includes 5 of the DSP circuit blocks of Figure 1 configured in various reduction modes.
Figure 7 is a diagram that illustrates an example of a multiplier circuit, or a portion of a multiplier circuit, that includes several of the DSP circuit blocks of Figure 1 configured in various reduction modes.
Figure 8 is a diagram of an illustrative example of a configurable integrated circuit (IC).
Figure 9A illustrates a block diagram of a system that can be used to implement a circuit design to be programmed into a programmable logic device using design software.
Figure 9B is a diagram that depicts an example of a programmable logic device that includes fabric dies and base dies that are coupled to one another via microbumps.
Figure 10 is a block diagram illustrating a computing system configured to implement one or more aspects of the embodiments described herein.

### DETAILED DESCRIPTION

Many types of integrated circuits (ICs) include specialized processing blocks that have a concentration of circuitry that has been partially or fully hardwired to perform one or more specific tasks, such as preprogrammed logical or mathematical operations. One example of a specialized processing block that has been provided in configurable ICs is a digital signal processing (DSP) circuit block. A DSP circuit block can include circuit structures designed to perform multiplication operations, addition operations, and/or accumulations of multiplication operations. Each DSP circuit block can, for example, include several multiplier circuits, adder circuits, registers, and multiplexer circuits. Some applications may require more than one specialized processing block. Examples for such functions include the implementation of vector (dot product) operations or sum-of-product operations, such as finite impulse response (FIR) filters.

According to some examples disclosed herein, a digital signal processing (DSP) circuit block is provided in an integrated circuit (IC) that can be configured to implement many different types of circuit structures and functions. As examples, the DSP circuit block can be configured as a filter structure, a larger multiplier constructed from a matrix of smaller multipliers, or a recursive reduction structure for a larger dataset. The filter structure can include a double density finite impulse response (FIR) mode, with various options of reducing precision being supported. The DSP circuit block can be configured, for example, as a 36 x 36 multiplier by aggregating 8-bit integer multipliers into 16-bit integer data paths, which are then separately integrated into the 36 x 36 multiplier. The DSP circuit block can also be configured in a quad recursive reduction structure. The DSP circuit block can provide twice the arithmetic density for 20% IC die area cost compared to previously known DSP circuit blocks.

One or more specific examples are described below. In an effort to provide a concise description of these examples, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Throughout the specification, and in the claims, the terms "connected" and "connection" mean a direct electrical connection between the circuits that are connected, without any intermediary devices. The terms "coupled" and "coupling" mean either a direct electrical connection between circuits or an indirect electrical connection through one or more passive or active intermediary devices that allows the transfer of information between circuits. The term "circuit" may mean one or more passive and/or active electrical components that are arranged to cooperate with one another to provide a desired function.

This disclosure discusses integrated circuit devices, including configurable (programmable) integrated circuits, such as field programmable gate arrays (FPGAs) and programmable logic devices. As discussed herein, an integrated circuit (IC) can include hard logic and/or soft logic. The circuits in an integrated circuit device (e.g., in a configurable IC) that are configurable by an end user are referred to as "soft logic." "Hard logic" generally refers to circuits in an integrated circuit device that have substantially less configurable features than soft logic or no configurable features.

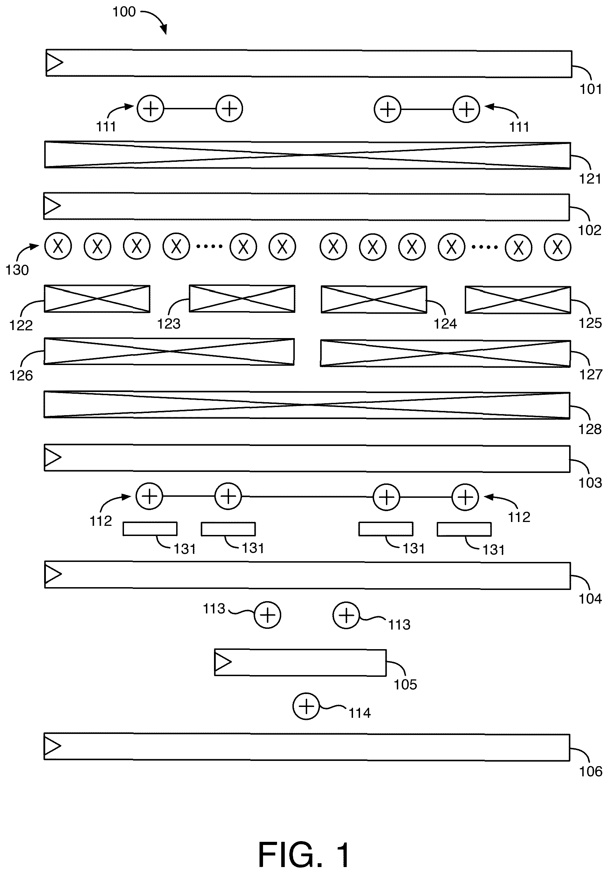

Figure 1 is a diagram that illustrates an example of a digital signal processing (DSP) circuit block 100 in an integrated circuit (IC) that has multiple levels of pipelined circuits. DSP circuit block 100 is configurable to implement several different functions by coupling together various circuits within DSP circuit block 100. The circuits within DSP circuit block 100 can be coupled together in a pipeline structure. DSP circuit block 100 can be formed in any type of integrated circuit (IC), such as a configurable IC (e.g., a field programmable gate array (FPGA) or programmable logic device (PLD)), a microprocessor IC, a graphics processing unit IC, a memory IC, an application specific IC, a transceiver IC, etc. In the examples disclosed herein, the circuitry, methods, and systems are described in the context of a configurable IC, such as an FPGA or PLD for the purpose of illustration.

DSP circuit block 100 includes register circuits 101-106, adder circuits 111-114, multiplier circuits 130, multiplexer and compressor circuits 121-128, and logic circuits 131. The DSP circuit block 100 is divided into 5 levels that are separated and pipelined by the 6 register circuits 101-106. The first level of DSP circuit block 100 between registers 101-102 includes integer adder circuits 111 that can be selectively combined (e.g., by coupling a carry out of one adder circuit 111 to the carry in of another adder circuit 111 to make a third adder having a larger precision). Next to the adder circuits 111 is a matrix of multiplexer and compressor circuits 121 that can be configured to route, and sometimes duplicate, data outputs of adder circuits 111 to inputs of selected ones of the multiplier circuits 130 in the second level of the DSP circuit block 100. The multiplier circuits 130 can be, as examples, low precision multipliers (e.g., 8-bit integer precision multipliers), floating point multipliers, or any combination thereof.

The second level of the DSP circuit block 100 between registers 102-103 includes multiplier circuits 130 and a number of layers of multiplexer and compressor circuits 122-128 that are provided to arrange the outputs of the multiplier circuits 130 in relation to each other. Each stage of the multiplexers in circuits 122-128 is terminated by an N-to-2 redundant form compression to provide output precision. The final level of multiplexers in circuits 122-128 outputs a single large number in redundant form. The multiplexer and compressor circuits 122-128 can be configured to shift and add (or shift and compress) the outputs of the multiplier circuits 130 in selected ways to generate different sizes of multipliers (e.g., 18 x 19 multipliers, 27 x 27 multipliers, a 36 x 36 multiplier, etc.). Any of the levels of DSP circuit block 100 can be selectively bypassed by configuring the multiplexer and compressor circuits 121-128. As a result, DSP circuit block 100 supports several different types of multiplier precisions.

The third level of the DSP circuit block 100 between registers 103-104 includes another stage of adder circuits 112 that can be selectively combined in any combination to make one or more larger precision adder circuits of a third precision. The adder circuits 112 are used to sum the redundant form results from the second level of the DSP circuit block 100 into a multiplier result. The adder circuits 112 can be, for example, fixed point adders.

The third level of the DSP circuit block 100 also includes additional redundant form compressor circuits. The adder circuits 112 and the compressor circuits in the third level can be configured to perform additional system level functions, such as accumulation, or the addition of the results of an adjacent DSP circuit block 100.

Logic circuits 131 can include a number of fixed to floating point conversion circuits that apply rounding, as well as error and exception handling, to the result of the integer multiplier circuits 130, which are used to perform the mantissa multiplication of floating point multipliers. The third level can also include other circuits (not shown) that calculate floating point exponent values.

The fourth level of the DSP circuit block 100 between registers 104-105 includes another stage of adder circuits 113 that can be configured to add the outputs of one or more of the previous levels of the DSP circuit block 100. The fifth level of the DSP circuit block 100 between registers 105-106 includes an adder circuit 114 that can be configured to add the outputs of one or more of the previous levels of the DSP circuit block 100. Adder circuits 113-114 can be, as examples, fixed or floating point adders.

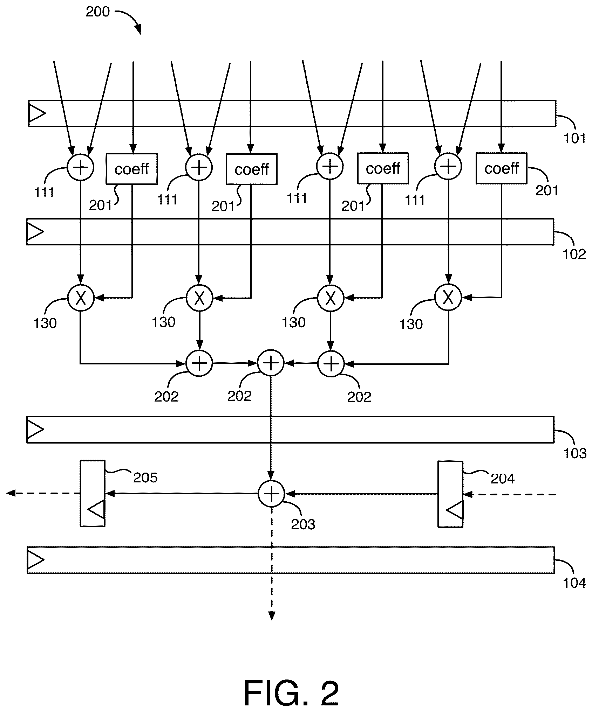

Figure 2 is a diagram that illustrates an example of the digital signal processing (DSP) circuit block 100 configured as a finite impulse response (FIR) filter circuit 200. The FIR filter circuit 200 of FIG. 2 includes register circuits 101-104, adder circuits 111, storage circuits 201, multiplier circuits 130, adder circuits 202, adder circuit 203, and systolic delay register circuits 204-205.

Each of the storage circuits 201 stores a coefficient (coeff.) that is provided to a first input of one of the multiplier circuits 130. In some examples, each of the storage circuits 201 can provide a coefficient to two of the multiplier circuits 130. In one example, each multiplier circuit 130 addresses half of one of the storage circuits 201. In one example, each of the storage circuits 201 can include individual memory bits, and a multiplexer network can be used to select the current coefficient being used by the multiplier circuit 130. In this example, two networks of multiplexers are provided, with one of the networks of multiplexers being used to access only half the number of memory bits in the storage circuit 201. The other network of multiplexers access all of the memory bits, supporting the multiplier circuits 130 to be backwards compatible with other DSP circuit block modes.

Each of the adder circuits 111 adds two input values to generate a sum that is provided to a second input of one of the multiplier circuits 130. The multiplier circuits 130 multiply the sums generated by the adder circuits 111 to the coefficients stored in storage circuits 201 to generate products that are provided to inputs of adder circuits 202. Adder circuits 202 add together the products generated by the multiplier circuits 130 to generate a sum that is provided to an input of adder circuit 203 (e.g., one of adder circuits 112).

Systolic delay register circuit 204 can store the sum generated by the adder circuit 203 in another FIR filter circuit 200 (not shown) in the IC. Adder circuit 203 in the FIR filter circuit 200 shown in FIG. 2 adds the sum generated by adder circuits 202 to the sum generated by the other FIR filter circuit 200 and stored in systolic delay register circuit 204 to generate a sum that is provided to systolic delay register circuit 205 or to an output of FIR filter circuit 200. Systolic delay register circuit 205 stores the sum generated by adder circuit 203 and provides the sum to a third FIR filter circuit 200 (not shown) in the IC. Thus, the systolic delay register circuits 204-205 can be used to build a larger systolic FIR filter circuit. In this example, delays need to be inserted between data samples, but delays are not needed between the data inputs into the DSP circuit block 100 and the multiplier circuits 130. Symmetric FIR filter circuits 200 can be supported by the collection of integer adders of Figure 1.

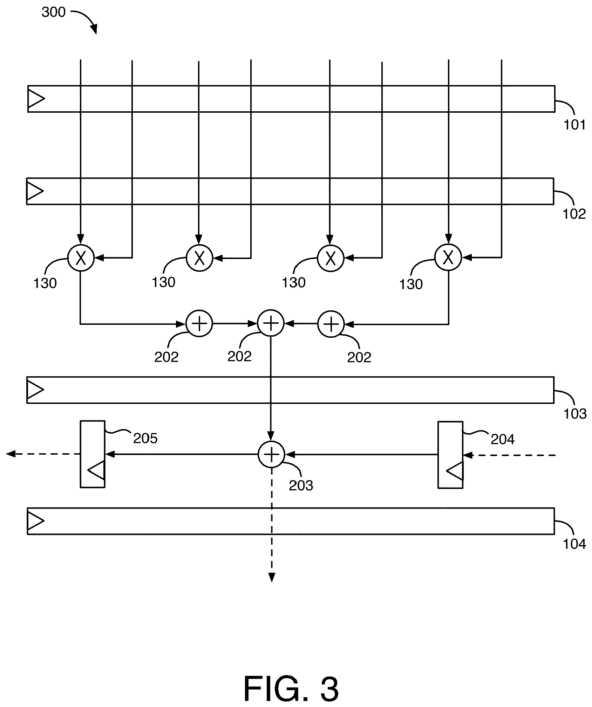

Figure 3 is a diagram that illustrates an example of the digital signal processing (DSP) circuit block 100 of Figure 1 configured as another finite impulse response (FIR) filter circuit 300. The FIR filter circuit 300 of FIG. 3 includes register circuits 101-104, multiplier circuits 130, adder circuits 202, adder circuit 203, and systolic delay register circuits 204-205. In the example of FIG. 3, multiplier circuits 130 multiply data input numbers to generate products that are provided to inputs of adder circuits 202. Adder circuits 202 add together the products generated by the multiplier circuits 130 to generate a sum that is provided to an input of adder circuit 203 (e.g., one of adder circuits 112). Adder circuit 203 in the FIR filter circuit 300 shown in FIG. 3 adds the sum generated by adder circuits 202 to the sum generated by another FIR filter circuit 300 (not shown) and stored in systolic delay register circuit 204 to generate a sum that is provided to systolic delay register circuit 205 or to an output of FIR filter circuit 300. Systolic delay register circuit 205 stores the sum generated by adder circuit 203 and provides the sum to a third FIR filter circuit 300 (not shown) in the IC. Thus, in the example of FIG. 3, the adder circuits 111 are bypassed, allowing data and coefficients to be directly routed to the multiplier circuits 130. Multi-channel and other types of filters can be supported by implementing portions of the FIR filter circuit 300 in soft logic.

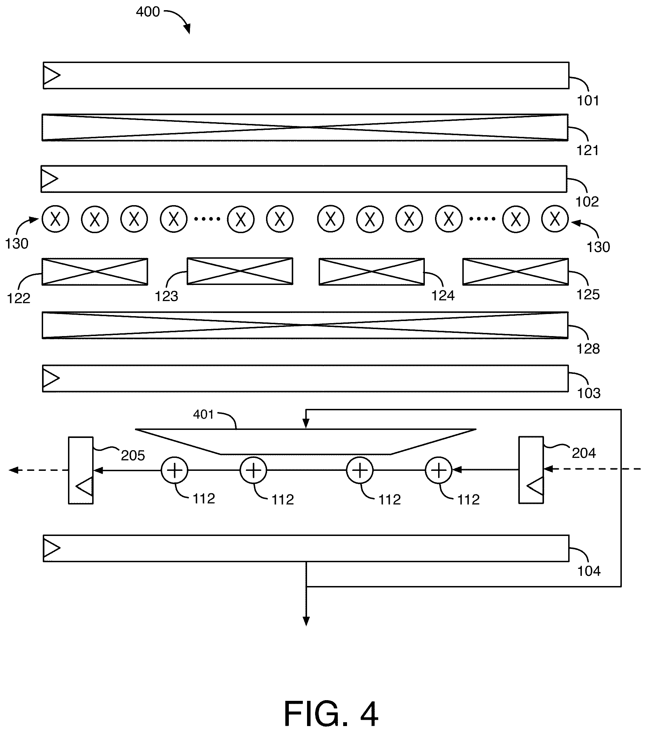

Figure 4 is a diagram that illustrates an example of the digital signal processing (DSP) circuit block 100 of Figure 1 configured as a partial product circuit 400 that is a portion of a larger multiplier circuit. Partial product circuit 400 includes register circuits 101-104, adder circuits 112, multiplier circuits 130, multiplexer and compressor circuits 121-125 and 128, multiplexer circuit 401, and systolic delay register circuits 204-205. The partial product circuit 400 is divided into 3 levels that are separated and pipelined by the register circuits 101-104. The partial product circuit 400 can be implemented as part of a larger multiplier circuit using the additional multiplier circuits 130 and the multiplexer and compressor circuits 121-125 and 128 of FIG. 4.

The outputs of the multiplexer and compressor circuit 121 in the first level of partial product circuit 400 are provided to the inputs of the multiplier circuits 130. The multiplier circuits 130 multiply the outputs of the multiplexer and compressor circuit 121 to generate products. The products generated by the multiplier circuits 130 are provided to the multiplexer and compressor circuits 122-125 and 128 in the second level to create a third precision redundant form set of numbers. The third precision redundant form set of numbers generated by the multiplexer and compressor circuits 122-125 and 128 are then provided to integer adder circuits 112 in the third level. The adder circuits 112 are combined to create a larger integer adder circuit to sum a larger set of the redundant numbers generated by the multiplexer and compressor circuits 122-125 and 128.

Additional compression circuitry in the third level can optionally be used to combine other larger numbers (e.g., for accumulation or the adding of an adjacent DSP circuit block output). Multiplexer circuit 401 can be used for accumulation by feeding back the sums of adder circuits 112 that are provided through register circuit 104 to the inputs of the adder circuits 112. Adder circuits 112 can perform accumulation by adding each previously generated sum received through multiplexer circuit 401 with the redundant numbers generated by multiplexer and compressor circuits 122-125 and 128.

The systolic delay register circuit 204 can store a sum generated by a second partial product circuit 400 in a second DSP circuit block 100 in the IC. The sum stored in systolic delay register circuit 204 can be provided to one or more of the adder circuits 112. The adder circuits 112 can add together the redundant numbers generated by the multiplexer and compressor circuits 122-125 and 128 and the sum stored in systolic delay register circuit 204 to generate a sum that is stored in systolic delay register circuit 205. The sum stored in systolic delay register circuit 205 is then provided to a third partial product circuit 400 in a third DSP circuit block 100 in the IC. In this example, the sums generated by adder circuits 112 are partial products that are used for larger multiplication operations. An appropriate number of the partial product circuits 400 can be used to build a multiplier circuit of any size.

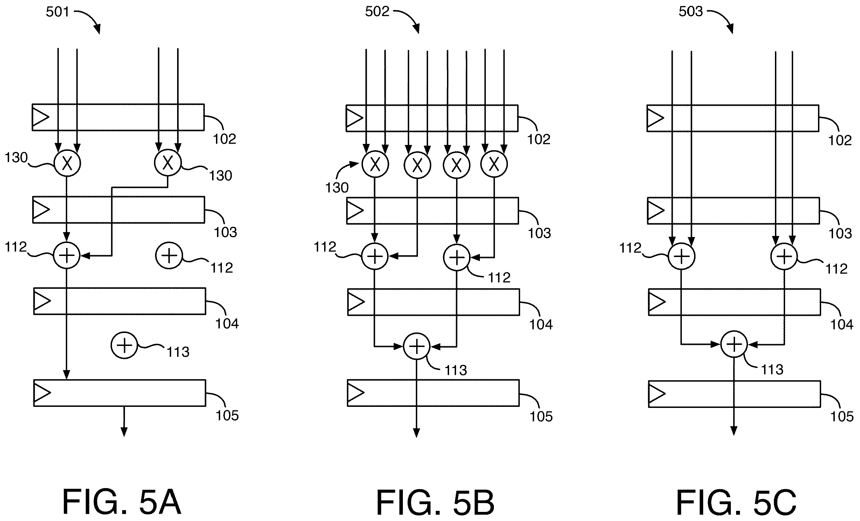

Figures 5A-5C are diagrams that illustrate examples of the digital signal processing (DSP) circuit block 100 of Figure 1 configured in three different reduction modes 501-503. Reduction is a technique that is used to simplify or speed up the process of multiplying large numbers. Reduction can be used to add together the results of multiplying together numbers to generate a dot product.

Figure 5A is a diagram that illustrates an example of the DSP circuit block 100 of Figure 1 configured in reduction mode 501. In reduction mode 501, the DSP circuit block 100 uses register circuits 102-105, two of the multiplier circuits 130 (e.g., floating point 32-bit multipliers), and one of the adder circuits 112. Each of the two multiplier circuits 130 multiplies two input numbers together to generate a product that is provided to an input of adder circuit 112. Adder circuit 112 adds together the products generated by the multiplier circuits 130 to generate a sum that is provided as the output of the DSP circuit block 100. Thus, in the reduction mode 501, the products generated by two of the multiplier circuits 130 are added by adder circuit 112 to generate a sum.

Figure 5B is a diagram that illustrates an example of the DSP circuit block 100 of Figure 1 configured in reduction mode 502. In reduction mode 502, the DSP circuit block 100 uses register circuits 102-105, four of the multiplier circuits 130 (e.g., 16-bit floating point multipliers), two of the adder circuits 112, and one of the adder circuits 113. Each of the four multiplier circuits 130 multiplies two input numbers to generate a product that is provided to an input of one of the adder circuits 112. Each of the adder circuits 112 adds together the products generated by two of the multiplier circuits 130 to generate a sum that is provided to an input of adder circuit 113. Adder circuit 113 adds together the sums generated by the adder circuits 112 to generate a sum that is provided as the output of the DSP circuit block 100. Thus, in the reduction mode 502, the products generated by four of the multiplier circuits 130 are added together by adder circuits 112-113 to generate a sum (e.g., a floating point 32-bit number).

Figure 5C is a diagram that illustrates an example of the DSP circuit block 100 of Figure 1 configured in reduction mode 503. In reduction mode 503, the DSP circuit block 100 uses register circuits 102-105, two of the adder circuits 112, and one of the adder circuits 113. Each of the adder circuits 112 adds together two input numbers (e.g., two floating point 32-bit numbers) to generate a sum that is provided to an input of adder circuit 113. Adder circuit 113 adds together the sums generated by the adder circuits 112 to generate a sum that is provided as the output of the DSP circuit block 100. Thus, in the reduction mode 503, adder circuits 112-113 add together 4 numbers (e.g., 4 floating point 32-bit numbers) to generate a sum.

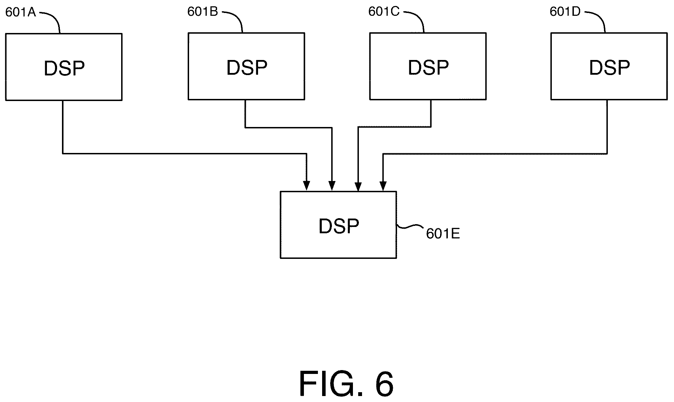

Figure 6 is a diagram that illustrates an example of a multiplier circuit, or a portion of a multiplier circuit, that includes 5 of the DSP circuit blocks 100 of Figure 1 configured in various reduction modes. The multiplier circuit (or portion thereof) of FIG. 6 includes 5 DSP circuit blocks 100 that are configured in various reduction modes to generate 5 configured DSP circuits 601A, 601B, 601C, 601D, and 601E. As an example, each of the 4 DSP circuits 601A, 601B, 601C, and 601D can be configured in the reduction mode 501 of FIG. 5A. As another example, each of the 4 DSP circuits 601A, 601B, 601C, and 601D can be configured in the reduction mode 502 of FIG. 5B. The 4 DSP circuits 601A-601D can be configured, as examples, as 8 floating point 32-bit multipliers in reduction mode 501, or as 16 floating point 16-bit multipliers in reduction mode 502. The DSP circuit 601E is configured in the reduction mode 503 of FIG. 5C. Thus, the DSP circuit 601E adds together the sums generated by the 4 DSP circuits 601A-601D to generate an output sum that represents the product of a multiplication operation or the partial product of a multiplication operation.

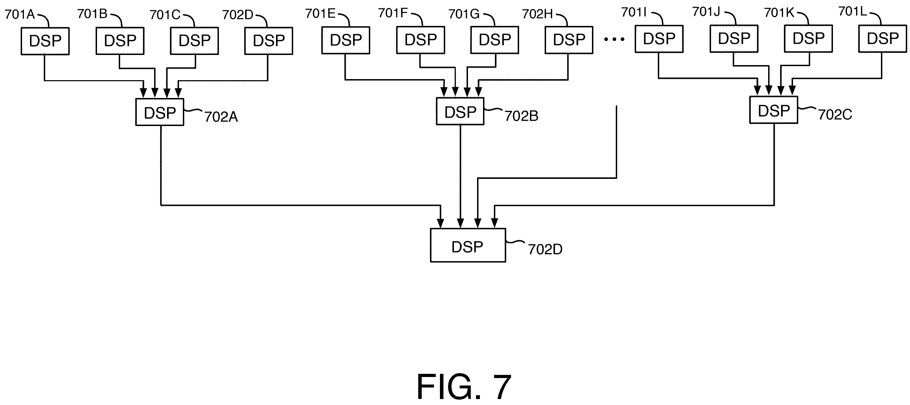

Figure 7 is a diagram that illustrates an example of a multiplier circuit, or a portion of a multiplier circuit, that includes several of the DSP circuit blocks 100 of Figure 1 configured in various reduction modes. The multiplier circuit (or portion thereof) of FIG. 7 includes several DSP circuit blocks 100 that are configured in various reduction modes to generate several configured DSP circuits, including DSP circuits 701A-701L and 702A-702D. As an example, each of the DSP circuits 701A-701L can be configured in the reduction mode 501 of FIG. 5A. As another example, each of the DSP circuits 701A-701L can be configured in the reduction mode 502 of FIG. 5B. Each of the DSP circuits 702A-702D is configured in the reduction mode 503 of FIG. 5C. Thus, the DSP circuits 702A-702D add together the sums generated by the DSP circuits 701A-701L as shown in FIG. 7 to generate an output sum that represents the product of a multiplication operation or the partial product of a multiplication operation.

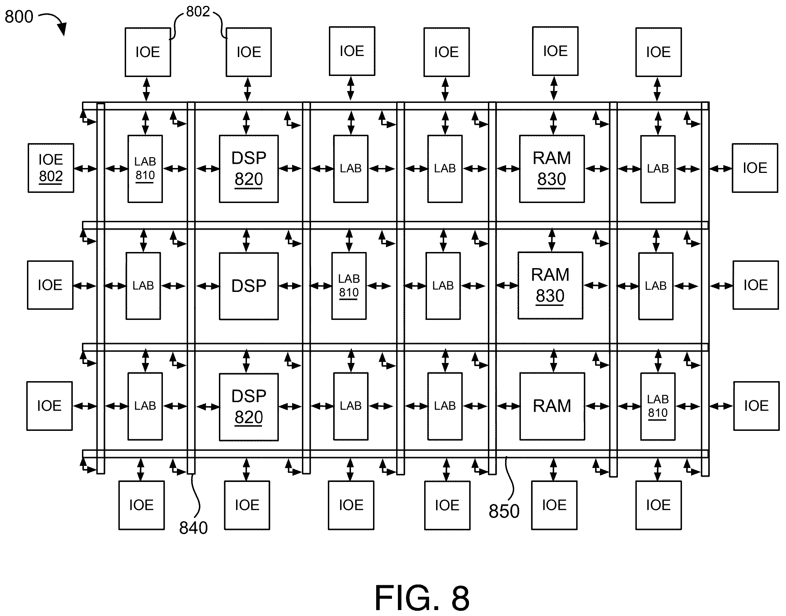

Figure 8 is a diagram of an illustrative example of a configurable integrated circuit (IC) 800. Configurable IC 800 is an example of an IC that can include the circuits disclosed herein with respect to FIGS. 1-7. As shown in FIG. 8, the configurable integrated circuit 800 includes a two-dimensional array of configurable logic circuit blocks, including logic array blocks (LABs) 810 and other configurable logic circuit blocks, such as random access memory (RAM) blocks 830 (e.g., BRAMs) and digital signal processing (DSP) blocks 820, for example. Configurable logic circuit blocks, such as LABs 810, can include smaller configurable regions (e.g., configurable logic elements, configurable logic blocks, or adaptive logic modules (ALMs)) that receive input signals and perform custom functions on the input signals to produce output signals. Each of the DSP blocks 820 can include one or more of the DSP circuit blocks 100 of FIG. 1. Each of the DSP circuit blocks 100 in IC 800 can be configured according to any one or more of the examples disclosed herein with respect to FIGS. 2-7.

The configurable integrated circuit 800 also includes programmable interconnect circuitry in the form of vertical routing channels 840 (i.e., interconnects formed along a vertical axis of configurable integrated circuit 800) and horizontal routing channels 850 (i.e., interconnects formed along a horizontal axis of configurable integrated circuit 800), each routing channel including at least one track to route at least one wire. One or more of the routing channels 840 and/or 850 can be part of a network-on-chip (NOC) having router circuits.

In addition, the configurable integrated circuit 800 has input/output elements (IOEs) 802 (e.g., including IO circuit blocks) for driving signals off of configurable integrated circuit 800 and for receiving signals from other devices. Input/output elements 802 can include parallel input/output circuitry, serial data transceiver circuitry, differential receiver and transmitter circuitry, or other circuitry used to connect one integrated circuit to another integrated circuit. Input/output elements 802 can include general purpose input/output (GPIO) circuitry (e.g., on the top and bottoms edges of IC 800), high-speed input/output (HSIO) circuitry (e.g., on the left edge of IC 800), and on-package input/output (OPIOs) circuitry (e.g., on the right edge of IC 800).

As shown, input/output elements 802 can be located around the periphery of the IC. If desired, the configurable integrated circuit 800 can have input/output elements 802 arranged in different ways. For example, input/output elements 802 can form one or more columns of input/output elements that can be located anywhere on the configurable integrated circuit 800 (e.g., distributed evenly across the width of the configurable integrated circuit). If desired, input/output elements 802 can form one or more rows of input/output elements (e.g., distributed across the height of the configurable integrated circuit). Alternatively, input/output elements 802 can form islands of input/output elements that can be distributed over the surface of the configurable integrated circuit 800 or clustered in selected areas.

Note that other routing topologies, besides the topology of the interconnect circuitry depicted in FIG. 8, can be used. For example, the routing topology can include wires that travel diagonally or that travel horizontally and vertically along different parts of their extent as well as wires that are perpendicular to the device plane in the case of three dimensional integrated circuits, and the driver of a wire can be located at a different point than one end of a wire. The routing topology can include global wires that span substantially all of configurable integrated circuit 800, fractional global wires such as wires that span part of configurable integrated circuit 800, staggered wires of a particular length, smaller local wires, or any other suitable interconnection resource arrangement.

Furthermore, it should be understood that examples disclosed herein may be implemented in any type of integrated circuit. If desired, the functional blocks of such an integrated circuit can be arranged in more levels or layers in which multiple functional blocks are interconnected to form still larger blocks. Other device arrangements can use functional blocks that are not arranged in rows and columns.

Configurable integrated circuit 800 can also contain programmable memory elements. The memory elements can be loaded with configuration data (also called programming data) using input/output elements (IOEs) 802. Once loaded, the memory elements each provide a corresponding static control signal that controls the operation of an associated functional block (e.g., LABs 810, DSP 820, RAM 830, or input/output elements 802).

In a typical scenario, the outputs of the loaded memory elements are applied to the gates of field-effect transistors in a functional block to turn certain transistors on or off and thereby configure the logic in the functional block including the routing paths. Programmable logic circuit elements that are controlled in this way include parts of multiplexers (e.g., multiplexers used for forming routing paths in interconnect circuits), look-up tables, logic arrays, AND, OR, NAND, and NOR logic gates, pass gates, etc.

The memory elements can use any suitable volatile and/or non-volatile memory structures such as random-access-memory (RAM) cells, fuses, antifuses, programmable read-only-memory memory cells, mask-programmed and laser-programmed structures, combinations of these structures, etc. Because the memory elements are loaded with configuration data during programming, the memory elements are sometimes referred to as configuration memory or programmable memory elements.

The programmable memory elements can be organized in a configuration memory array consisting of rows and columns. A data register that spans across all columns and an address register that spans across all rows can receive configuration data. The configuration data can be shifted onto the data register. When the appropriate address register is asserted, the data register writes the configuration data to the configuration memory elements of the row that was designated by the address register.

Configurable integrated circuit 800 can include configuration memory that is organized in sectors, whereby a sector can include the configuration bits that specify the function and/or interconnections of the subcomponents and wires in or crossing that sector. Each sector can include separate data and address registers.

The configurable IC 800 of FIG. 8 is merely one example of an IC that can be used with embodiments disclosed herein. The embodiments disclosed herein can be used with any suitable electronic integrated circuit or system. For example, the embodiments disclosed herein can be used with numerous types of electronic devices such as processor integrated circuits, central processing units, memory integrated circuits, graphics processing unit integrated circuits, application specific standard products (ASSPs), application specific integrated circuits (ASICs), and configurable logic integrated circuits. Examples of configurable logic integrated circuits include programmable arrays logic (PALs), programmable logic arrays (PLAs), field programmable logic arrays (FPLAs), electrically programmable logic devices (EPLDs), electrically erasable programmable logic devices (EEPLDs), logic cell arrays (LCAs), complex programmable logic devices (CPLDs), and field programmable gate arrays (FPGAs), just to name a few.

The integrated circuits disclosed in one or more embodiments herein can be part of a data processing system that includes one or more of the following components: a processor; memory; input/output circuitry; and peripheral devices. The data processing system can be used in a wide variety of applications, such as computer networking, data networking, instrumentation, video processing, digital signal processing, or any suitable other application. The integrated circuits can be used to perform a variety of different logic functions.

In general, software and data for performing any of the functions disclosed herein can be stored in non-transitory computer readable storage media. Non-transitory computer readable storage media is tangible computer readable storage media that stores data and software for access at a later time, as opposed to media that only transmits propagating electrical signals (e.g., wires). The software code may sometimes be referred to as software, data, program instructions, instructions, or code. The non-transitory computer readable storage media can, for example, include computer memory chips, non-volatile memory such as non-volatile random-access memory (NVRAM), one or more hard drives (e.g., magnetic drives or solid state drives), one or more removable flash drives or other removable media, compact discs (CDs), digital versatile discs (DVDs), Blu-ray discs (BDs), other optical media, and floppy diskettes, tapes, or any other suitable memory or storage device(s).

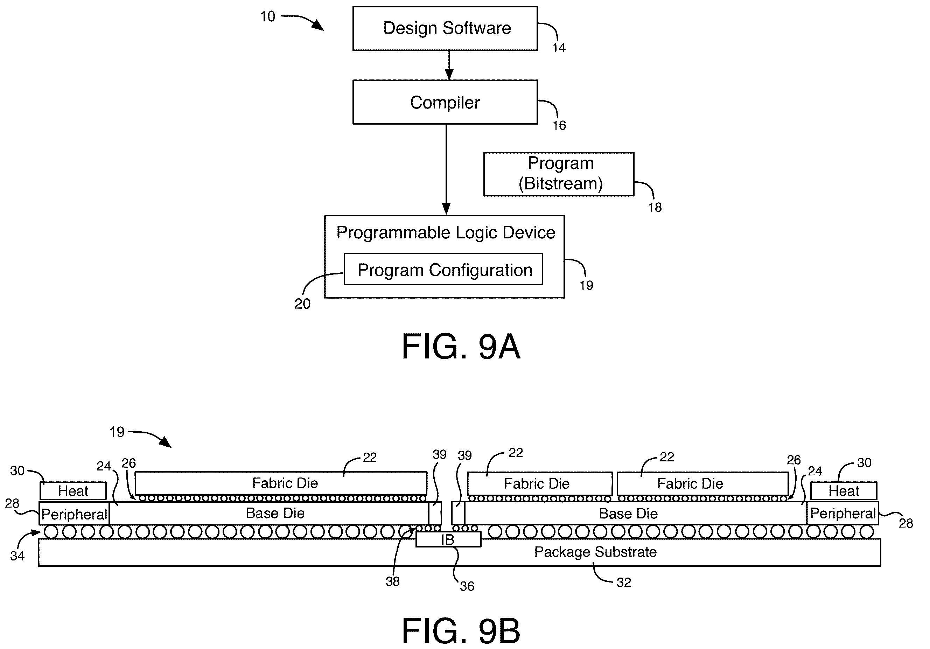

Figure 9A illustrates a block diagram of a system 10 that can be used to implement a circuit design to be programmed onto a programmable logic device 19 using design software. A designer can implement circuit design functionality on an integrated circuit, such as a reconfigurable programmable logic device 19 (e.g., a field programmable gate array (FPGA)). The designer can implement the circuit design to be programmed onto the programmable logic device 19 using design software 14. The design software 14 can use a compiler 16 to generate a low-level circuit-design program (bitstream) 18, sometimes known as a program object file and/or configuration program, that programs the programmable logic device 19. Thus, the compiler 16 can provide machine-readable instructions representative of the circuit design to the programmable logic device 19. For example, the programmable logic device 19 can receive one or more programs (bitstreams) 18 that describe the hardware implementations that should be stored in the programmable logic device 19. A program (bitstream) 18 can be programmed into the programmable logic device 19 as a configuration program 20. The configuration program 20 can, in some cases, represent an accelerator function to perform for machine learning, video processing, voice recognition, image recognition, or other highly specialized task.

In some implementations, a programmable logic device can be any integrated circuit device that includes a programmable logic device with two separate integrated circuit die where at least some of the programmable logic fabric is separated from at least some of the fabric support circuitry that operates the programmable logic fabric. One example of such a programmable logic device is shown in FIG. 9B, but many others can be used, and it should be understood that this disclosure is intended to encompass any suitable programmable logic device where programmable logic fabric and fabric support circuitry are at least partially separated on different integrated circuit die.

Figure 9B is a diagram that depicts an example of the programmable logic device 19 that includes three fabric die 22 and two base die 24 that are connected to one another via microbumps 26. In the example of FIG. 9B, at least some of the programmable logic fabric of the programmable logic device 19 is in the three fabric die 22, and at least some of the fabric support circuitry that operates the programmable logic fabric is in the two base die 24. For example, some of the circuitry of configurable IC 800 shown in FIG. 8 (e.g., LABs 810, DSP 820, and RAM 830) can be located in the fabric die 22 and some of the circuitry of IC 800 (e.g., input/output elements 802) can be located in the base die 24.

Although the fabric die 22 and base die 24 appear in a one-to-one relationship or a two-to-one relationship in FIG. 9B, other relationships can be used. For example, a single base die 24 can attach to several fabric die 22, or several base die 24 can attach to a single fabric die 22, or several base die 24 can attach to several fabric die 22 (e.g., in an interleaved pattern). Peripheral circuitry 28 can be attached to, embedded within, and/or disposed on top of the base die 24, and heat spreaders 30 can be used to reduce an accumulation of heat on the programmable logic device 19. The heat spreaders 30 can appear above, as pictured, and/or below the package (e.g., as a double-sided heat sink). The base die 24 can attach to a package substrate 32 via conductive bumps 34. In the example of FIG. 9B, two pairs of fabric die 22 and base die 24 are shown communicatively connected to one another via an interconnect bridge 36 (e.g., an embedded multi-die interconnect bridge (EMIB)) and microbumps 38 at bridge interfaces 39 in base die 24.

In combination, the fabric die 22 and the base die 24 can operate in combination as a programmable logic device 19 such as a field programmable gate array (FPGA). It should be understood that an FPGA can, for example, represent the type of circuitry, and/or a logical arrangement, of a programmable logic device when both the fabric die 22 and the base die 24 operate in combination. Moreover, an FPGA is discussed herein for the purposes of this example, though it should be understood that any suitable type of programmable logic device can be used.

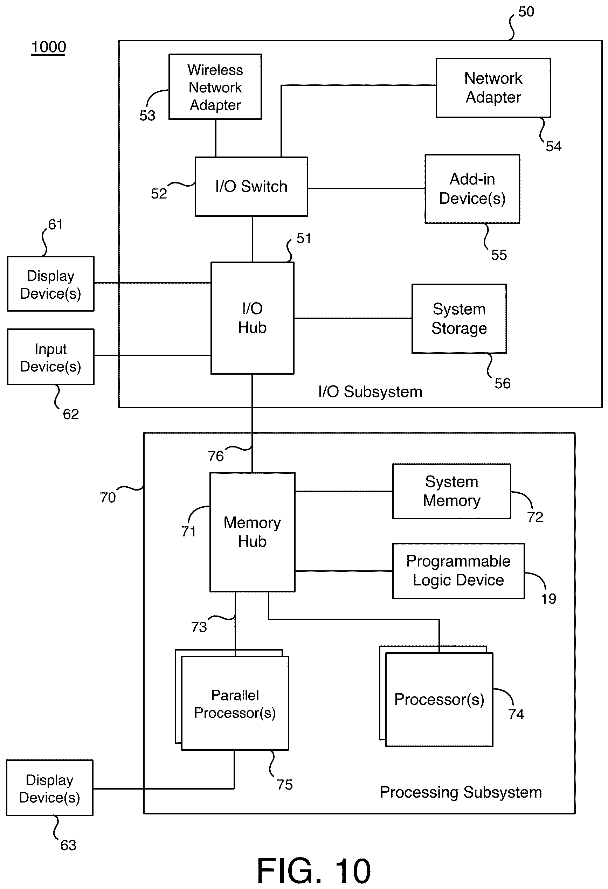

Figure 10 is a block diagram illustrating a computing system 1000 configured to implement one or more aspects of the embodiments described herein. The computing system 1000 includes a processing subsystem 70 having one or more processor(s) 74, a system memory 72, and a programmable logic device 19 communicating via an interconnection path that can include a memory hub 71. The memory hub 71 can be a separate component within a chipset component or can be integrated within the one or more processor(s) 74. The memory hub 71 couples with an input/output (I/O) subsystem 50 via a communication link 76. The I/O subsystem 50 includes an input/output (I/O) hub 51 that can enable the computing system 1000 to receive input from one or more input device(s) 62. Additionally, the I/O hub 51 can enable a display controller, which can be included in the one or more processor(s) 74, to provide outputs to one or more display device(s) 61. In one embodiment, the one or more display device(s) 61 coupled with the I/O hub 51 can include a local, internal, or embedded display device.

In one embodiment, the processing subsystem 70 includes one or more parallel processor(s) 75 coupled to memory hub 71 via a bus or other communication link 73. The communication link 73 can use one of any number of standards based communication link technologies or protocols, such as, but not limited to, PCI Express, or can be a vendor specific communications interface or communications fabric. In one embodiment, the one or more parallel processor(s) 75 form a computationally focused parallel or vector processing system that can include a large number of processing cores and/or processing clusters, such as a many integrated core (MIC) processor. In one embodiment, the one or more parallel processor(s) 75 form a graphics processing subsystem that can output pixels to one of the one or more display device(s) 61 coupled via the I/O Hub 51. The one or more parallel processor(s) 75 can also include a display controller and display interface (not shown) to enable a direct connection to one or more display device(s) 63.

Within the I/O subsystem 50, a system storage unit 56 can connect to the I/O hub 51 to provide a storage mechanism for the computing system 1000. An I/O switch 52 can be used to provide an interface mechanism to enable connections between the I/O hub 51 and other components, such as a network adapter 54 and/or a wireless network adapter 53 that can be integrated into the platform, and various other devices that can be added via one or more add-in device(s) 55. The network adapter 54 can be an Ethernet adapter or another wired network adapter. The wireless network adapter 53 can include one or more of a Wi-Fi, Bluetooth, near field communication (NFC), or other network device that includes one or more wireless radios.

The computing system 1000 can include other components not shown in FIG. 10, including other port connections, optical storage drives, video capture devices, and the like, that can also be connected to the I/O hub 51. Communication paths interconnecting the various components in FIG. 10 can be implemented using any suitable protocols, such as PCI (Peripheral Component Interconnect) based protocols (e.g., PCI-Express), or any other bus or point-to-point communication interfaces and/or protocol(s), such as the NV-Link high-speed interconnect, or interconnect protocols known in the art.

In one embodiment, the one or more parallel processor(s) 75 incorporate circuitry optimized for graphics and video processing, including, for example, video output circuitry, and constitutes a graphics processing unit (GPU). In another embodiment, the one or more parallel processor(s) 75 incorporate circuitry optimized for general purpose processing, while preserving the underlying computational architecture. In yet another embodiment, components of the computing system 1000 can be integrated with one or more other system elements on a single integrated circuit. For example, the one or more parallel processor(s) 75, memory hub 71, processor(s) 74, and I/O hub 51 can be integrated into a system on chip (SoC) integrated circuit. Alternatively, the components of the computing system 1000 can be integrated into a single package to form a system in package (SIP) configuration. In one embodiment, at least a portion of the components of the computing system 1000 can be integrated into a multi-chip module (MCM), which can be interconnected with other multi-chip modules into a modular computing system.

The computing system 1000 shown herein is illustrative. Other variations and modifications are also possible. The connection topology, including the number and arrangement of bridges, the number of processor(s) 74, and the number of parallel processor(s) 75, can be modified as desired. For instance, in some embodiments, system memory 72 is connected to the processor(s) 74 directly rather than through a bridge, while other devices communicate with system memory 72 via the memory hub 71 and the processor(s) 74. In other alternative topologies, the parallel processor(s) 75 are connected to the I/O hub 51 or directly to one of the one or more processor(s) 74, rather than to the memory hub 71. In other embodiments, the I/O hub 51 and memory hub 71 can be integrated into a single chip. Some embodiments can include two or more sets of processor(s) 74 attached via multiple sockets, which can couple with two or more instances of the parallel processor(s) 75.

Some of the particular components shown herein are optional and may not be included in all implementations of the computing system 1000. For example, any number of add-in cards or peripherals can be supported, or some components can be eliminated. Furthermore, some architectures can use different terminology for components similar to those illustrated in FIG. 10. For example, the memory hub 71 can be referred to as a Northbridge in some architectures, while the I/O hub 51 can be referred to as a Southbridge.

Additional examples are now described. Example 1 is an integrated circuit comprising a digital signal processing circuit, wherein the digital signal processing circuit comprises: fixed point multiplier circuits; floating point multiplier circuits; and adder circuits, wherein the digital signal processing circuit is configurable to implement a reduction of floating point multiplication operations based on floating point inputs to the digital signal processing circuit using the fixed point multiplier circuits, the floating point multiplier circuits, and the adder circuits.

In Example 2, the integrated circuit of Example 1 may optionally include, wherein the floating point multiplier circuits use the fixed point multiplier circuits as mantissa multipliers.

In Example 3, the integrated circuit of any one of Examples 1-2 may optionally include, wherein the fixed point multiplier circuits and the floating point multiplier circuits comprise a fixed point multiplier and circuitry to implement a floating point multiplier, and wherein functionality of the fixed point multiplier is accessible independently of operation of the floating point multiplier.

In Example 4, the integrated circuit of any one of Examples 1-3 may optionally include, wherein the digital signal processing circuit comprises a network of multiplexer circuits and three of the adder circuits that are configurable to implement the reduction of four floating point numbers, and wherein the adder circuits are individually accessible through the network of multiplexer circuits.

In Example 5, the integrated circuit of any one of Examples 1-4 may optionally include, wherein at least a subset of the floating point multiplier circuits are 32-bit or 16-bit floating point multipliers.

In Example 6, the integrated circuit of any one of Examples 1-5 may optionally include, wherein the floating point multiplier circuits generate products that are cast into a high precision representation before addition by the adder circuits.

In Example 7, the integrated circuit of any one of Examples 1-6 may optionally include, wherein the digital signal processing circuit is configurable as a finite impulse response filter circuit.

In Example 8, the integrated circuit of any one of Examples 1-7 may optionally include, wherein the digital signal processing circuit further comprises a multiplexer circuit that is configurable to feedback outputs of the adder circuits to inputs of the adder circuits to implement accumulation of addition.

In Example 9, the integrated circuit of any one of Examples 1-8 may optionally include, wherein the fixed point multiplier circuits are configurable to generate sums that are partial products of a larger fixed point multiplication operation.

Example 10 is a method for creating a digital signal processing block in an integrated circuit, the method comprising: providing first adder circuits configurable to sum input values; providing first multiplexer circuits configurable to distribute the input values or outputs of the first adder circuits to multiplier circuits; providing the multiplier circuits configurable to generate partial products for a multiplication using numbers received from the first multiplexer circuits; providing second multiplexer circuits configurable to arrange the partial products into overlapping first bit vectors; and providing first compressor circuits configurable to reduce the overlapping first bit vectors into a smaller number of second bit vectors.

In Example 11, the method of Example 10 further comprises: providing third multiplexer circuits configurable to arrange the second bit vectors into third bit vectors.

In Example 12, the method of Example 11 further comprises: providing second compressor circuits configurable to reduce the third bit vectors into a smaller number of fourth bit vectors.

In Example 13, the method of Example 12 further comprises: providing second adder circuits configurable to sum the fourth bit vectors into a set of values.

In Example 14, the method of any one of Examples 10-13 may optionally include, wherein providing the first adder circuits further comprises providing the first adder circuits configurable to be combined to produce second adder circuits that are larger than the first adder circuits.

In Example 15, the method of any one of Examples 10-14 may optionally include, wherein the digital signal processing block is configurable as a finite impulse response filter circuit.

Example 16 is a reduction circuit comprising: first digital signal processing blocks comprising first multiplier circuits, wherein the first digital signal processing blocks are configurable to sum first outputs of the first multiplier circuits to generate second outputs; and a second digital signal processing block configurable to sum the second outputs generated by the first digital signal processing blocks to generate a third output, wherein the reduction circuit is configurable to generate the third output for a multiplication.

In Example 17, the reduction circuit of Example 16 may optionally include, wherein each of the first digital signal processing blocks is configurable to sum a subset of the first outputs of at least four of the first multiplier circuits to generate one of the second outputs.

In Example 18, the reduction circuit of any one of Examples 16-17 may optionally include, wherein the reduction circuit further comprises at least four of the first digital signal processing blocks configurable to generate the second outputs.

In Example 19, the reduction circuit of any one of Examples 16-18 may optionally include, wherein each of a first subset of the first digital signal processing blocks is configurable to sum a first subset of the first outputs of at least four of the first multiplier circuits to generate one of the second outputs, and wherein each of a second subset of the first digital signal processing blocks is configurable to sum a second subset of the first outputs of two of the first multiplier circuits to generate one of the second outputs.

In Example 20, the reduction circuit of any one of Examples 16-19 further comprises: third digital signal processing blocks configurable to sum fourth outputs of second multiplier circuits to generate a fifth output; and a fourth digital signal processing block configurable to sum the fifth output and the third output to generate a sixth output, wherein the reduction circuit is configurable to generate the sixth output for the multiplication.

The foregoing description of the exemplary embodiments has been presented for the purpose of illustration. The foregoing description is not intended to be exhaustive or to be limiting to the examples disclosed herein. The foregoing is merely illustrative of the principles of this disclosure and various modifications can be made by those skilled in the art. The foregoing embodiments may be implemented individually or in any combination.

## Claims

1. An integrated circuit comprising a digital signal processing circuit, wherein the digital signal processing circuit comprises:
fixed point multiplier circuits;
floating point multiplier circuits; and
adder circuits, wherein the digital signal processing circuit is configurable to implement a reduction of floating point multiplication operations based on floating point inputs to the digital signal processing circuit using the fixed point multiplier circuits, the floating point multiplier circuits, and the adder circuits.

2. The integrated circuit of claim 1, wherein the floating point multiplier circuits use the fixed point multiplier circuits as mantissa multipliers.

3. The integrated circuit of any one of claims 1-2, wherein the fixed point multiplier circuits and the floating point multiplier circuits comprise a fixed point multiplier and circuitry to implement a floating point multiplier, and wherein functionality of the fixed point multiplier is accessible independently of operation of the floating point multiplier.

4. The integrated circuit of any one of claims 1-3, wherein the digital signal processing circuit comprises a network of multiplexer circuits and three of the adder circuits that are configurable to implement the reduction of four floating point numbers, and wherein the adder circuits are individually accessible through the network of multiplexer circuits.

5. The integrated circuit of any one of claims 1-4, wherein at least a subset of the floating point multiplier circuits are 32-bit or 16-bit floating point multipliers.

6. The integrated circuit of any one of claims 1-5, wherein the floating point multiplier circuits generate products that are cast into a high precision representation before addition by the adder circuits.

7. The integrated circuit of any one of claims 1-6, wherein the digital signal processing circuit is configurable as a finite impulse response filter circuit.

8. The integrated circuit of any one of claims 1-7, wherein the digital signal processing circuit further comprises a multiplexer circuit that is configurable to feedback outputs of the adder circuits to inputs of the adder circuits to implement accumulation of addition.

9. The integrated circuit of any one of claims 1-8, wherein the fixed point multiplier circuits are configurable to generate sums that are partial products of a larger fixed point multiplication operation.

10. A method for creating a digital signal processing block in an integrated circuit, the method comprising:
providing first adder circuits configurable to sum input values;
providing first multiplexer circuits configurable to distribute the input values or outputs of the first adder circuits to multiplier circuits;
providing the multiplier circuits configurable to generate partial products for a multiplication using numbers received from the first multiplexer circuits;
providing second multiplexer circuits configurable to arrange the partial products into overlapping first bit vectors; and
providing first compressor circuits configurable to reduce the overlapping first bit vectors into a smaller number of second bit vectors.

11. The method of claim 10 further comprising:
providing third multiplexer circuits configurable to arrange the second bit vectors into third bit vectors.

12. The method of claim 11 further comprising:
providing second compressor circuits configurable to reduce the third bit vectors into a smaller number of fourth bit vectors.

13. The method of claim 12 further comprising:
providing second adder circuits configurable to sum the fourth bit vectors into a set of values.

14. The method of any one of claims 10-13, wherein providing the first adder circuits further comprises providing the first adder circuits configurable to be combined to produce second adder circuits that are larger than the first adder circuits.

15. The method of any one of claims 10-14, wherein the digital signal processing block is configurable as a finite impulse response filter circuit.
